# EUROPEAN PATENT SPECIFICATION

(11) **EP 3 202 608 B1**
(45) Date of publication and mention of the grant of the patent: **01.09.2021**
(21) Application number: 17151194.2
(22) Date of filing: 12.01.2017
(51) Int. Cl.: B60K 6/48, B60K 6/383, B60K 7/00, B60K 6/26

(54) **HYBRID SCOOTER**
HYBRIDROLLER
SCOOTER HYBRIDE

(30) Priority: 04.02.2016 TW 105104220
(43) Date of publication of application: 09.08.2017
(73) Proprietor: Reduce Carbon Energy Develop Co., Ltd., New Taipei City 238 (TW)
(72) Inventor: CHUN, Chen-Che, 238 New Taipei City (TW)
(74) Representative: Brown, Michael Stanley

(56) References cited:
- WO-A2-2009/047806
- JP-B2- 3 296 931
- US-A1- 2012 325 571

## Description

### BACKGROUND OF INVENTION

### FIELD OF INVENTION

The present invention relates to a hybrid, scooter.

### RELATED PRIOR ART

A hybrid scooter includes an engine and a motor. And the engine or motor is used to drive the hybrid scooter at a time. Thus, both the consumption of fuel and the exhaust emissions are reduced.

A Taiwanese Utility Model Publication No. TWM380897 disclosed an automatic transmission for a hybrid vehicle. The automatic transmission includes a first power source, a first axle, a second axle, a third axle, a second power source, a clutch and a speed-changing unit. The first power source is an engine. The first axle is operatively connected to the first power source. The second axle is operatively connected to the first axle. The third axle is operatively connected to a wheel. The second power source is a motor inserted in a hub of the wheel. The clutch is a one-way clutch. The second and third axles are operatively connected to the clutch. The closing and opening of the clutch determines whether the second axle drives the third axle.

When the second power source drives the hybrid vehicle, the second power source drives the hub of the wheel, and the clutch is in the open position where the second axle is separated from the third axle. When the first power source drives the hybrid vehicle, the clutch is in the closed position, and the first power source drives the second axle via the first axle, and the second axle drives the third axle via the clutch.

The repeated switch of the clutch between the open and closed positions wears away the clutch. In such case, the closed position of the clutch is not effective, and the clutch has to be replaced with a new one. The clutch is located between the second and third axles. Therefore, the second axle has to be detached from the first axle before the clutch can be replaced with a new one. However, it is difficult and troublesome to detach the second axle from the first axle due to a transmission mechanism used to connect them to each other.

In Specification WO 2009/047806 there is described a coaxial transmission for a hybrid scooter that comprises a wheel, an engine, a gear box via which the engine is connected to the wheel, and a motor inserted in the wheel, wherein the motor comprises a stator and a rotor attached to a hub of the wheel to allow the motor to drive the wheel. The coaxial transmission comprises a clutch, being a one-way clutch connected to the rotor and an axle coaxially supporting the wheel and comprising an end connected to the gear box on a side of the wheel so that the axle can drive the rotor, thereby driving the wheel.

### SUMMARY OF INVENTION

It is the object of the present invention to provide an improved design of a hybrid scooter.

According to the present invention there is provided a hybrid scooter as claimed in claim 1.

Advantageously, the clutch can easily be detached from the motor and the axle to be repaired or replaced with a new one.

Other objectives, advantages and features of the present invention will be apparent from the following description referring to the attached drawings.

### BRIEF DESCRIPTION OF DRAWINGS

The present invention will be described via detailed illustration of two embodiments referring to the drawings wherein:
FIG. 1 is a cross-sectional view of a coaxial transmission inserted in a wheel of a hybrid scooter according to the first embodiment of the present invention,
FIG. 2 is an exploded view of the coaxial transmission and the wheel shown in FIG. 1, and
FIG. 3 is a cross-sectional view of a coaxial transmission inserted in a wheel of a hybrid scooter according to the second embodiment of the present invention.

### DETAILED DESCRIPTION OF EMBODIMENTS

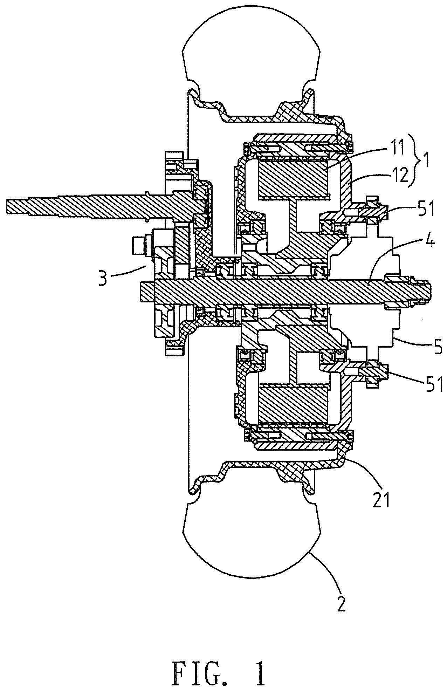

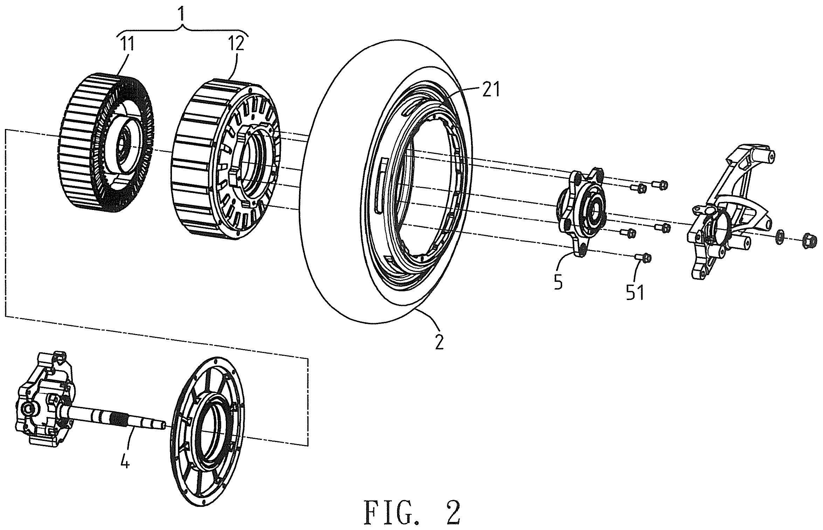

Referring to FIGS. 1 and 2, a hybrid scooter includes an engine (not shown), a motor (1) and a wheel (2). The engine or the motor (1) drives the hybrid scooter at a time. The engine is operatively connected to a gear box (3). The engine drives the wheel (2) via the gear box (3). The motor (1) is inserted in the wheel (2). The motor (1) includes a stator (11) and a rotor (12). The rotor (12) is operatively connected to a hub (21) of the wheel (2) so that the motor (1) drives the wheel (2).

The hybrid scooter further includes a coaxial transmission according to a first embodiment of the present invention. The coaxial transmission includes an axle (4) and a clutch (5). The axle (4) coaxially supports the wheel (2). An end of the axle (4) is operatively connected to the gear box (3) on a side of the wheel (2) to allow the engine to drive the axle (4) via the gear box (3). Another end of the axle (4) is operatively connected to the clutch (5) on another side of the wheel (2). The clutch (5) is cassette-type one-way clutch. The clutch (5) is operatively connected to the rotor (12) via several threaded bolts (51). Thus, the clutch (5) is in a closed position to allow the axle (4) to drive the rotor (12) via the clutch (5), thereby driving the wheel (2) when the rotation of the axle (4) is faster than that of the rotor (12). The clutch (5) is in an open position where the axle (4) cannot drive the rotor (12) via the clutch when the rotation of the rotor (12) is faster than that of the axle (4). Hence, the rotor (12) drives the wheel (2), but does not drive the axle (4) via the clutch (5).

When the motor (1) drives the hybrid scooter, the motor (1) drives the rotor (12) that in turn drives the wheel (2). The rotor (12) does not drive the axle (4) via the clutch (5). Thus, both of the gear box (3) and axle (4) do not hinder the operation of the motor (1) to drive the hybrid scooter.

When the engine drives the hybrid scooter, the engine drives the axle (4) via the gear box (3). The axle (4) does not directly drive the wheel (2). Instead, the axle (4) drives the rotor (12) via the clutch (5), and the rotor (12) in turn drives the wheel (2). The rotation of the rotor (12) is further used for charging a battery (not shown) that is electrically connected to the motor (1).

The coaxial transmission of the hybrid scooter according to the present invention is different from the automatic transmission disclosed in TWM380897 in one feature. In the coaxial transmission, the single axle (4) alone drives the wheel (2) when the engine is used as a power source. However, in the automatic transmission, the second and third axles are used to drive the wheel when the engine is used as a power source.

Moreover, the axle (4) does not have to be detached from the gear box (3) before the clutch (5) is replaced since an end of the axle (4) is operatively connected to the gear box (3) on a side of the wheel (2) while the other end of the axle (4) is operatively connected to the clutch (5) on the other side of the wheel (2). The clutch (5) can easily be detached from the rotor (12) by removing the threaded bolts (51). Hence, the clutch (5) can easily be detached from the axle (4) before it is repaired or replaced with a new one.

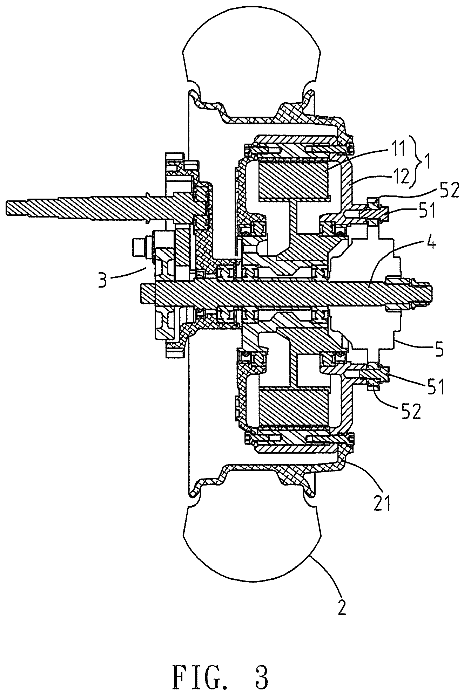

Referring to FIG. 3, there is a coaxial transmission of a hybrid scooter according to a second embodiment of the present invention. The second embodiment is identical to the first embodiment except for that an elastic element (52) is provided on each of the threaded bolts (51) before the threaded bolts (51) are driven into the rotor (12) of the motor (1) via the clutch (5). The elastic elements (52) can be rubber sleeves for example. The elastic elements (52) reduce impacts on the hybrid scooter during the switching between the power sources, i.e., the engine and the motor (1).

## Claims

1. A hybrid scooter comprising a wheel (2), an engine, a gear box (3) via which the engine is connected to the wheel (2), and a motor (1) inserted in the wheel (2), wherein the motor (1) comprises a stator (11) and a rotor (12) attached to a hub (21) of the wheel (2) to allow the motor (1) to drive the wheel (2), and a coaxial transmission comprising:
a clutch (5) being a one-way clutch connected to the rotor (12), and
an axle (4) coaxially supporting the wheel (2) and comprising an end connected to the gear box (3) on a side of the wheel (2), so that the axle (4) can drive the rotor (12), thereby driving the wheel (2),
**characterized in that** another end of the axle (4) is connected to the clutch (5) on another side of the wheel (2) and **in that** the axle (4) can drive the rotor (12) via the clutch (5).

2. The hybrid scooter according to claim 1, wherein the axle (4) drives the rotor (12) via the clutch (5) when the axle (4) spins faster than the rotor (12).

3. The hybrid scooter according to claim 1, wherein the clutch (5) is in an open position and the rotor (12) drives the wheel (2) when the rotor spins faster than the axle (4).

4. The hybrid scooter according to claim 1, further comprising several threaded bolts (51) for connecting the clutch (5) to the rotor (12) of the motor (1) and elastic elements (52) each provided on a corresponding one of the threaded bolts (51).

5. The hybrid scooter according to claim 4, wherein the elastic elements (52) comprise rubber sleeves.

## Patentansprüche

1. Hybridroller, umfassend ein Rad (2), eine Kraftmaschine, ein Getriebe (3), über das die Kraftmaschine mit dem Rad (2) verbunden ist, und einen in das Rad (2) eingesetzten Motor (1), wobei der Motor (1) einen Stator (11) und einen Rotor (12), befestigt an einer Nabe (21) des Rades (2), umfasst, um dem Motor (1) zu ermöglichen, das Rad (2) anzutreiben, und ein Koaxialgetriebe, Folgendes umfassend:
eine Kupplung (5), die eine mit dem Rotor (12) verbundene Einwegkupplung ist, und eine Achse (4), die das Rad (2) koaxial stützt und ein mit dem Getriebe (3) an einer Seite des Rades (2) verbundenes Ende umfasst, sodass die Achse (4) den Rotor (12) antreiben kann, dadurch das Rad (2) antreibend,
**dadurch gekennzeichnet, dass** ein anderes Ende der Achse (4) mit der Kupplung (5) an einer anderen Seite des Rades (2) verbunden ist, und dadurch, dass die Achse (4) den Rotor (12) über die Kupplung (5) antreiben kann.

2. Hybridroller nach Anspruch 1, wobei die Achse (4) den Rotor (12) über die Kupplung (5) antreibt, wenn sich die Achse (4) schneller dreht als der Rotor (12).

3. Hybridroller nach Anspruch 1, wobei die Kupplung (5) in einer offenen Position ist und der Rotor (12) das Rad (2) antreibt, wenn sich der Rotor schneller dreht als die Achse (4).

4. Hybridroller nach Anspruch 1, ferner umfassend mehrere gewindete Schrauben (51) zum Verbinden der Kupplung (5) mit dem Rotor (12) des Motors (1) und elastische Elemente (52), jeweils an einer entsprechenden der gewindeten Schrauben (51) bereitgestellt.

5. Hybridroller nach Anspruch 4, wobei die elastischen Elemente (52) Gummihülsen umfassen.

## Revendications

1. Scooter hybride comprenant une roue (2), un moteur à combustible, une boîte de vitesses (3) par le biais de laquelle le moteur à combustible est relié à la roue (2), et un moteur (1) inséré dans la roue (2), dans lequel le moteur (1) comprend un stator (11) et un rotor (12) fixés à un moyeu (21) de la roue (2) pour permettre au moteur (1) d'entraîner la roue (2), et une transmission coaxiale comprenant :
un embrayage (5) qui est une roue libre reliée au rotor (12), et
un essieu (4) supportant coaxialement la roue (2) et comprenant une extrémité reliée à la boîte de vitesses (3) sur un côté de la roue (2), afin que l'essieu (4) puisse entraîner le rotor (12), entraînant ainsi la roue (2),
**caractérisé en ce qu'**une autre extrémité de l'essieu (4) est reliée à l'embrayage (5) sur un autre côté de la roue (2) et **en ce que** l'essieu (4) peut entraîner le rotor (12) par le biais de l'embrayage (5).

2. Scooter hybride selon la revendication 1, dans lequel l'essieu (4) entraîne le rotor (12) par le biais de l'embrayage (5) lorsque l'essieu (4) tourne plus vite que le rotor (12).

3. Scooter hybride selon la revendication 1, dans lequel l'embrayage (5) est dans une position ouverte et le rotor (12) entraîne la roue (2) lorsque le rotor tourne plus vite que l'essieu (4).

4. Scooter hybride selon la revendication 1, comprenant en outre plusieurs boulons filetés (51) destinés à relier l'embrayage (5) au rotor (12) du moteur (1) et des éléments élastiques (52), chacun étant placé sur l'un correspondant des boulons filetés (51).

5. Scooter hybride selon la revendication 4, dans lequel les éléments élastiques (52) comprennent des manchons de caoutchouc.
